# EUROPÄISCHE PATENTSCHRIFT

(11) **EP 0 845 398 B1**
(45) Veröffentlichungstag und Bekanntmachung des Hinweises auf die Patenterteilung: **06.06.2001**
(21) Anmeldenummer: 97119669.6
(22) Anmeldetag: 11.11.1997
(51) Int. Cl.: B60T 17/00, B60T 11/32

(54) **Druckluftaufbereitungseinrichtung für Druckluftbeschaffungsanlagen auf Kraftfahrzeugen**
Apparatus for processing compressed air for compressed air systems in motor vehicles
Régulateur de pression pour installations de production d'air comprimé dans des véhicules

(30) Priorität: 29.11.1996 DE 19649498
(43) Veröffentlichungstag der Anmeldung: 03.06.1998
(73) Patentinhaber: Haldex Brake Products GmbH, 69123 Heidelberg (DE)
(72) Erfinder: Blanz, Roland, 69253 Heiligkreuzsteinach (DE); Hilberer, Eduard, Dipl.-Ing., 68766 Hockenheim (DE)
(74) Vertreter: Patentanwälte Rehberg + Hüppe

(56) Entgegenhaltungen:
- EP-A- 0 689 117
- EP-A- 0 776 807
- DE-A- 3 506 178
- DE-A- 3 514 989
- DE-A- 4 206 172

## Beschreibung

Die Erfindung betrifft eine Druckluftaufbereitungseinrichtung für Druckluftbeschaffungsanlagen von Kraftfahrzeugen, die eine Baueinheit aus einem elektropneumatischen Druckregler, einem integrierten elektropneumatisch ausgebildeten Mehrkreisschutzventil und einem Lufttrockner bildet, mit einem einen Eingangsanschluß und einen Auslaß aufweisenden gemeinsamen Gehäuse, in dem ein Durchtrittsraum für die herangeführte Druckluft vorgesehen ist, der über ein gesteuertes, als Sicherheitsventil ausgebildetes Auslaßventil in dessen Offenstellung mit der Atmosphäre verbunden ist, mit einem dem Durchtrittsraum nachgeschalteten Rückschlagventil, mit einer Einrichtung zum abwechselnden Öffnen und Schließen des Auslaßventils, mit mehreren gleichartigen den einzelnen Kreisen zugeordneten Steuereinheiten, die je ein entgegen der Strömungsrichtung schließendes Rückschlagventil und eine Betätigungseinheit zum gesteuerten Öffnen des Rückschlagventils aufweisen. Mechanisch-pneumatisch ausgebildete Ventile und Steuereinheiten gelten in der Fachwelt auf dem hier angesprochenen Gebiet als besonders betriebssicher, während bei elektropneumatisch ausgebildeten Teilen die Betriebssicherheit oft in Frage gestellt wird. Bei einem Spannungsausfall auf dem Kraftfahrzeug fallen elektropneumatisch ausgebildete Teile in der Regel aus.

Eine elektropneumatisch ausgebildete Druckluftaufbereitungseinrichtung der eingangs beschriebenen Art ist aus der DE 44 21 575 A1 bekannt. In einem gemeinsamen Gehäuse ist sowohl ein elektropneumatisch ausgebildeter Druckregler wie auch ein elektropneumatisch ausgebildetes Mehrkreisschutzventil und ein Lufttrockner vereinigt. Als Steuereinheiten für den Druckregler einerseits und die verschiedenen Kreise des Mehrkreisschutzventils andererseits dienen gleichartige Elemente in Form eines entgegen der Strömungsrichtung schließenden Rückschlagventils, dem eine Betätigungseinheit aus einem Kolben mit Stößel zugeordnet ist, der wiederum elektrisch vorgesteuert ist. Das Rückschlagventil des Druckreglers ist ein als Sicherheitsventil ausgebildetes Auslaßventil, welches also in die Atmosphäre öffnet, während die Rückschlagventile des Mehrkreisschutzventils in die einzelnen Betriebskreise öffnen. Das Rückschlagventil des Druckreglers kann beispielsweise einen Öffnungsdruck von 13 bar aufweisen, der zugleich den Sicherheitsdruck der Druckluftaufbereitungseinrichtung darstellt. Entsteht aus irgendwelchen Gründen im Durchtrittsraum der Druckluftaufbereitungseinrichtung ein höherer Druck, dann öffnet das Rückschlagventil des Druckreglers und begrenzt den Druck im Durchtrittsraum auf den eingestellten Sicherheitsdruck. Auch die den einzelnen Kreisen zugeordneten Rückschlagventile werden eingestellt und bestimmen somit den jeweiligen Kreissicherungsdruck. Die Einstellung der Rückschlagventile des Mehrkreisschutzventils im Verhältnis zur Einstellung des Rückschlagventils des Druckreglers ist problematisch. Wenn die Rückschlagventile des Mehrkreisschutzventils relativ hoch eingestellt werden, z. B. auf einen Öffnungsdruck von 10 bar, dann ergibt sich bei einem Ausfall der Elektrik ein nachfüllbarer Behälterdruck von lediglich 13 - 10 = 3 bar. Werden die Rückschlagventile der Kreise dagegen relativ niedrig eingestellt, z. B. auf einen Öffnungsdruck von 3 bar, dann können bei dem Ausfall eines Kreises infolge Auftretens eines Lecks auch die intakten Kreise lediglich mit einem Druck von 3 bar aufgefüllt bzw. nachgefüllt werden. Beide angesprochenen Defektfälle, nämlich Spannungsausfall einerseits und Auftreten eines Lecks in einem Kreis andererseits, stellen jedoch realistische Schadens- und Gefahrenfälle dar. Bei der bekannten Druckluftaufbereitungseinrichtung führt ein Spannungsausfall einerseits zu den beschriebenen Noteigenschaften und andererseits dazu, daß eine Regenerierung des Trockners nicht mehr stattfindet. Wird das Fahrzeug ohne Spannungsversorgung der Druckluftaufbereitungseinrichtung über längere Zeit weitergefahren, dann kann es bei winterlichen Temperaturen zum Einfrieren des nicht mehr regenerierten Trockners und damit zu einem Totalausfall der Bremsanlage kommen.

Der Erfindung liegt die Aufgabe zugrunde, eine elektropneumatisch ausgebildete Druckluftaufbereitungseinrichtung der eingangs beschriebenen Art, also mit Druckregler, Mehrkreisschutzventil und Trockner, bereitzustellen, die eine verbesserte Kreisbefüllung bei Spannungsausfall aufweist und bei der trotz Spannungsausfall eine Regeneration des Trockners erfolgt.

Erfindungsgemäß wird dies bei einer Druckluftaufbereitungseinrichtung der eingangs beschriebenen Art dadurch erreicht, daß zusätzlich zu dem elektropneumatischen Druckregler ein mechanisch-pneumatischer Druckregler integriert ist, dessen Abschaltdruck deutlich höher als der Abschaltdruck des elektropneumatischen Druckreglers eingestellt ist, daß der mechanisch-pneumatische Druckregler zugleich als Schaltventil für die Einschaltung einer Regenerationsphase für den Lufttrockner nach Erreichen seines Abschaltdruckes ausgebildet ist, und daß das als Sicherheitsventil ausgebildete Auslaßventil auf einen höheren Öffnungsdruck als der Abschaltdruck des mechanisch-pneumatischen Druckreglers eingestellt ist.

Die Erfindung geht von dem Gedanken aus, zusätzlich zu dem elektropneumatisch ausgebildeten Druckregler noch einen mechanisch-pneumatisch ausgebildeten Druckregler in die Druckluftaufbereitungseinrichtung zu integrieren. Während bisher im Stand der Technik die Entwicklung so verlaufen ist, daß der mechanisch-pneumatisch ausgebildete Druckregler durch einen elektropneumatisch ausgebildeten Druckregler ersetzt wurde, greift die Erfindung angesichts der oben beschriebenen Defekte auf einen mechanisch-pneumatisch ausgebildeten Druckregler zurück, der aber zusätzlich zu dem elektropneumatisch ausgebildeten Druckregler integriert wird. Bei intakter Anlage, also bei ordnungsgemäßer Spannungsversorgung, arbeitet die Druckluftaufbereitungseinrichtung über den elektropneumatisch ausgebildeten Druckregler. Der mechanisch-pneumatisch ausgebildete Druckregler spricht nicht an, weil dessen Abschaltdruck deutlich höher als der Abschaltdruck des elektropneumatisch ausgebildeten Druckreglers eingestellt ist. Unter einer deutlich höheren Einstellung wird eine Einstellung verstanden, die einen solchen Abstand von dem Abschaltdruck des elektropneumatisch ausgebildeten Druckreglers aufweist, daß auch beispielsweise auftretende Reibungen im pneumatischen Teil des elektropneumatisch ausgebildeten Druckreglers nicht zu einem Ansprechen des mechanisch-pneumatischen Druckreglers führen können. Der mechanisch-pneumatische Druckregler soll nur dann arbeiten, wenn tatsächlich ein Spannungsausfall vorliegt. Es versteht sich, daß bei ordnungsgemäßer Spannungsversorgung auch eine ordnungsgemäße Regeneration des Lufttrockners in bekannter Weise erfolgt. Aber auch dann, wenn ein Spannungsausfall vorliegt und der mechanisch-pneumatische Druckregler die Versorgung der Kreise steuert, findet eine zyklische Regeneration des Lufttrockners statt. Zu diesem Zweck ist der mechanisch-pneumatische Druckregler zugleich auch als Schaltventil für die Einschaltung der Regenerationsphase für den Lufttrockner ausgebildet. Diese Regenerationsphase wird nach Erreichen des Abschaltdruckes des mechanisch-pneumatischen Druckreglers eingenommen. Das als Sicherheitsventil ausgebildete Auslaßventil des elektropneumatisch ausgebildeten Druckreglers wird zusätzlich auf einen höheren Öffnungsdruck als der Abschaltdruck des mechanisch-pneumatischen Druckreglers eingestellt. Diese vergleichsweise zum Stand der Technik erhöhte Einstellung ist insgesamt vorteilhaft.

Die neue Druckluftaufbereitungseinrichtung weist den wesentlichen Vorteil auf, daß bei Spannungsausfall die Umschaltung der Lastlaufphase auf die Leerlaufphase des Druckreglers bei einem erhöhten Abschaltdruck stattfindet und somit in den einzelnen Kreisen ein Vorratsdruck aufgebaut wird, der zwar niedriger als der Vorratsdruck bei elektrisch intakter Einrichtung, aber höher als bei Spannungsausfall an einer Druckluftaufbereitungseinrichtung ohne mechanisch-pneumatischen Druckregler ist. Während im Stand der Technik z. B. ein Sicherheitsdruck von 13 bar an dem Rückschlagventil des elektropneumatisch ausgebildeten Druckreglers eingestellt wird und die Einstellung der Rückschlagventile der Kreise des Mehrkreisschutzventils auf einen Kreissicherungsdruck von etwa 6,5 bar erfolgt, ergibt sich ohne den Einsatz eines mechanisch-pneumatischen Druckreglers bei Spannungsausfall ein Vorratsdruck von 6,5 bar in den einzelnen Kreisen. Bei der neuen Druckluftaufbereitungseinrichtung hingegen kann das Rückschlagventil des elektropneumatisch ausgebildeten Druckreglers beispielsweise auf 15 bar Sicherheitsdruck eingestellt werden. Der mechanisch-pneumatische Druckregler wird so eingestellt, daß er einen Abschaltdruck von beispielsweise 14 bar erhält. Wenn dann die Rückschlagventile der Kreise auf einen Kreissicherungsdruck von 6,5 bar eingestellt werden, ergibt sich vorteilhaft bei Spannungsausfall ein Vorratsdruck in den einzelnen Kreisen von 14 - 6,5 = 7,5 bar. Dieser Vorratsdruck liegt also bei Spannungsausfall um 1 bar vergleichsweise höher.

Im anderen Defektfall, also bei Auftreten eines Lecks in einem Kreis und bei ordnungsgemäßer Spannungsversorgung der Druckluftaufbereitungseinrichtung, ergeben sich verschiedene Möglichkeiten, die von der Größe des Lecks relativ zu der vom Kompressor gelieferten Druckluftmenge abhängen. Bei Auftreten eines relativ kleinen Lecks in einem Kreis kann der elektropneumatisch ausgebildete Druckregler ordnungsgemäß arbeiten, und es können Vorratsdrücke in den einzelnen Kreisen bereitgestellt werden, die dem Abschaltdruck des elektropneumatischen Druckreglers entsprechen, also beispielsweise Drücke in der Größenordnung von 11 oder 12 bar. Liegt dagegen ein großes Leck in einem Kreis vor, so daß mehr abströmen kann als vom Kompressor nachgefördert wird, dann läßt sich in den intakten Kreisen lediglich ein Vorratsdruck von z. B. 6,5 bar aufrechterhalten, entsprechend dem eingestellten Öffnungsdruck der Rückschlagventile der Kreise.

Der mechanisch-pneumatische Druckregler kann einen auf einer Feder abgestützten Kolben aufweisen, der nach Überbrückung eines Freigangs ein geschlossenes Durchlaßventil zum Abschalten des gesteuerten Auslaßventils des elektropneumatischen Druckreglers in die Leerlaufphase öffnet. Der mechanisch-pneumatisch ausgebildete Druckregler und der elektropneumatisch ausgebildete Druckregler werden baulich vereinigt, indem beiden Druckreglern nur ein gesteuertes Auslaßventil zugeordnet wird. Die Betätigungseinheit für das als Sicherheitsventil ausgebildete Rückschlagventil der beiden Druckregler weist als Betätigungseinheit einen Kolben mit Stößel auf, dem zusätzlich noch ein weiterer separat bewegbarer Kolben zugeordnet ist. Damit werden zwei Wirkflächen an der Betätigungseinheit geschaffen, wobei die eine Wirkfläche über die elektrische Vorsteuerung des elektropneumatischen Druckreglers angesteuert wird, während die andere Wirkfläche von dem mechanisch-pneumatischen Druckregler angesteuert wird. Man kann diese bauliche Vereinigung der beiden Druckregler auch so betrachten, daß zusätzlich zu einem komplett ausgebildeten elektropneumatischen Druckregler ein rudimentärer mechanisch-pneumatischer Druckregler vorgesehen ist.

Für die Regeneration des Trockners bei Arbeiten des mechanisch-pneumatischen Druckreglers, also bei Spannungsausfall, gibt es mehrere Möglichkeiten. So kann von der vom mechanisch-pneumatischen Druckregler zum gesteuerten Auslaßventil führenden Steuerleitung eine Rückströmleitung für die Regenerationsphase des Lufttrockners ausgehen, in der ein Rückschlagventil vorgesehen ist. Diese Steuerleitung wird damit dann belüftet, wenn der Kolben des mechanisch-pneumatischen Druckreglers abgeschaltet hat. In der Rückströmleitung ist zweckmäßig neben dem Rückschlagventil noch eine Drossel vorgesehen. Eine andere Möglichkeit besteht darin, daß der Kolben des mechanisch-pneumatischen Druckreglers eine Dichtung aufweist, der eine überfahrbare Bohrung zugeordnet ist, von der eine Rückströmleitung für die Regenerationsphase des Lufttrockners ausgeht und in der ebenfalls ein Rückschlagventil vorgesehen ist.

Die elektrisch vorgesteuerte Betätigungseinheit zumindest einer der gleichartigen, den einzelnen Kreisen zugeordneten Steuereinheiten kann zwei hintereinander angeordnete Kolben mit Stößel zum gesteuerten Öffnen des Rückschlagventils aufweisen, wobei die Wirkfläche des einen Kolbens an die elektrische Vorsteuerung des elektropneumatischen Druckreglers und die Wirkfläche des anderen Kolbens an eine von der überfahrbaren Bohrung herangeführte Steuerleitung angeschlossen ist. Damit sind auch hier Teile der Steuereinheiten der Kreise funktionsmäßig dem elektropneumatischen Druckregler einerseits und dem mechanisch-pneumatischen Druckregler andererseits zugeordnet. Dies gilt zumindest für den Stößel und das jeweilige Rückschlagventil des Kreises. Durch die bauliche Vereinigung findet eine Einsparung an einzelnen Elementen statt. Bei intakter Einrichtung und ordnungsgemäßer Spannungsversorgung erfolgt das Aufstoßen des Rückschlagventils über die elektrische Vorsteuerung des betreffenden Kreises. Bei Spannungsausfall erfolgt das Aufstoßen des Rückschlagventils des betreffenden Kreises beim Schalten durch den mechanisch pneumatischen Druckregler. In diesem letzteren Fall wird der Abschaltdruck des mechanisch-pneumatischen Druckreglers zum Vorratsdruck in dem betreffenden Kreis.

Besonders vorteilhaft ist es, wenn die Wirkfläche des Kolbens, der über die von der überfahrbaren Bohrung herangeführte Steuerleitung des mechanisch-pneumatischen Druckreglers beaufschlagbar ist, kleiner als die von der Vorsteuerung der betreffenden Steuereinheit beaufschlagte Wirkfläche des anderen Kolbens ausgebildet ist. Wenn der mechanisch-pneumatische Druckregler infolge Spannungsausfall arbeitet, erfolgt dann durch die entsprechende Bemessung der Wirkflächen zueinander kein Aufstoßen des Rückschlagventils, sondern nur eine Teilentlastung im Öffnungssinn. Wenn beispielsweise der Abschaltdruck des mechanisch-pneumatischen Druckreglers 14 bar beträgt und die Rückschlagventile der Kreise auf einen Kreissicherungsdruck von 6,5 bar eingestellt sind, ergäbe sich ein Vorratsdruck von 7,5 bar ohne die Teilentlastung. Wenn diese Teilentlastung einem Druck von etwa 1 bar entspricht, wird die Federvorspannung der Feder des Rückschlagventils von 6,5 auf 5,5 bar reduziert, so daß der Vorratsdruck in dem betreffenden Kreis um etwa 1 bar angehoben wird (14 - 5,5 = 8,5 bar). Diese aufgezeigte Dimensionierung der beiden Wirkflächen bietet die Möglichkeit, den Kreissicherungsdruck z. B. von 6,5 auf 10 bar anzuheben. Das würde bei einem Spannungsausfall zu einem Vorratsdruck von 14 - 10 = 4 bar führen. Die beschriebene Teilentlastung gestattet das Anheben des Vorratsdruckes auf einen sinnvollen Wert, z. B. auf 10 bar, wobei die Teilentlastung 4 bar entspricht.

Der Hub der Dichtung des Kolbens des mechanisch-pneumatischen Druckreglers relativ zu der überfahrbaren Bohrung kann kleiner als der Schalthub des Kolbens des mechanisch-pneumatischen Druckreglers von der Lastlaufphase in die Leerlaufphase ausgebildet sein. Dies ergibt die Möglichkeit, vor Erreichen des Abschaltdruckes des mechanisch-pneumatischen Druckreglers bereits die Teilentlastung der federnd vorgespannten Rückschlagventile der Kreise auszusteuern. Auf diese Weise können die Behälter der Kreise schneller mit einem erhöhten Vorratsdruck aufgefüllt werden, und zwar bevor der Abschaltdruck des mechanisch-pneumatischen Druckreglers erreicht ist.

Der Kolben des mechanisch-pneumatischen Druckreglers kann als Ringkolben ausgebildet und von einer Schaltstange durchsetzt sein, die zusätzlich auf einer weiteren Feder abgestützt ist. Diese Unterteilung des Kolbens des mechanisch-pneumatischen Druckreglers ermöglicht es, jedem Kolbenteil eine gesonderte Feder zuzuordnen und auch die Kolbenteile unterschiedlich zu bewegen mit dem Ziel, die Steuereinheiten der Kreise zu einem vergleichsweise frühen Zeitpunkt zu beeinflussen. Damit wird es möglich, die Funktion der Teilentlastung in sinnvoller Weise von dem Schalten des mechanisch-pneumatischen Druckreglers zu trennen. In diesem Zusammenhang kann die den Ringkolben belastende Feder in Abhängigkeit zu dem Auftreten eines festgelegten Steuerdruckes in der zu dem gesteuerten Rückschlagventil des betreffenden Kreises führenden Steuerleitung ausgelegt sein. Bereits vor Erreichen des Abschaltdruckes des mechanisch-pneumatischen Druckreglers soll in der Steuerleitung zu dem gesteuerten Rückschlagventil des betreffenden Kreises Druck ausgesteuert werden, um die Vorspannung des gesteuerten Rückschlagventils der Steuereinheit zu entlasten.

Eine andere baulich besonders einfache Ausführungsform ergibt sich durch die Anwendung weitgehend gleicher oder ähnlicher Teile und Elemente sowohl für den elektropneumatischen Druckregler wie auch für die den einzelnen Kreisen zugeordneten Steuereinheiten. Es ist jeweils nur ein in Strömungsrichtung öffnendes Rückschlagventil vorgesehen, dem ein einziger Kolben mit Stößel zugeordnet ist. Die Wirkflächen der Kolben sind über Elektromagnete vorgesteuert. Von dem mechanisch-pneumatisch ausgebildeten Druckregler ist nur der Schaltkolben in die Druckluftaufbereitungseinrichtung integriert. Die von dem Schaltkolben ausgehende Schaltleitung ist über die elektrische Vorsteuerung des elektropneumatischen Druckreglers geführt. Die von dem Schaltkolben ausgehende Steuerleitung ist über die elektrischen Vorsteuerungen der Kreise geführt. Damit können die Wirkflächen an den Kolben der Stößel einmal über die elektrischen Vorsteuerungen und zum anderen, also bei Spannungsausfall, über den Schaltkolben des mechanisch-pneumatischen Druckreglers angesteuert und genutzt werden.

Die Erfindung wird anhand verschiedener Ausführungsbeispiele weiter erläutert und beschrieben. Es zeigen:
- Fig. 1: eine schematisierte Darstellung der Druckluftaufbereitungseinrichtung in einer ersten Ausführungsform,
- Fig. 2: eine Einzelheit der Druckluftaufbereitungseinrichtung gemäß Fig. 1 in vergrößertem Maßstab,
- Fig. 3: eine Weiterbildung eines Teils des mechanisch-pneumatischen Druckreglers gemäß Fig. 2,
- Fig. 4: eine weitere Ausführungsform wesentlicher Elemente des mechanisch-pneumatischen Druckreglers,
- Fig. 5: eine Detaildarstellung der einem Kreis zugeordneten Steuereinheit,
- Fig. 6: eine Steuereinheit eines Kreises ähnlich Fig. 5 und
- Fig. 7: eine weitere Ausführungsform der Druckluftaufbereitungseinrichtung.

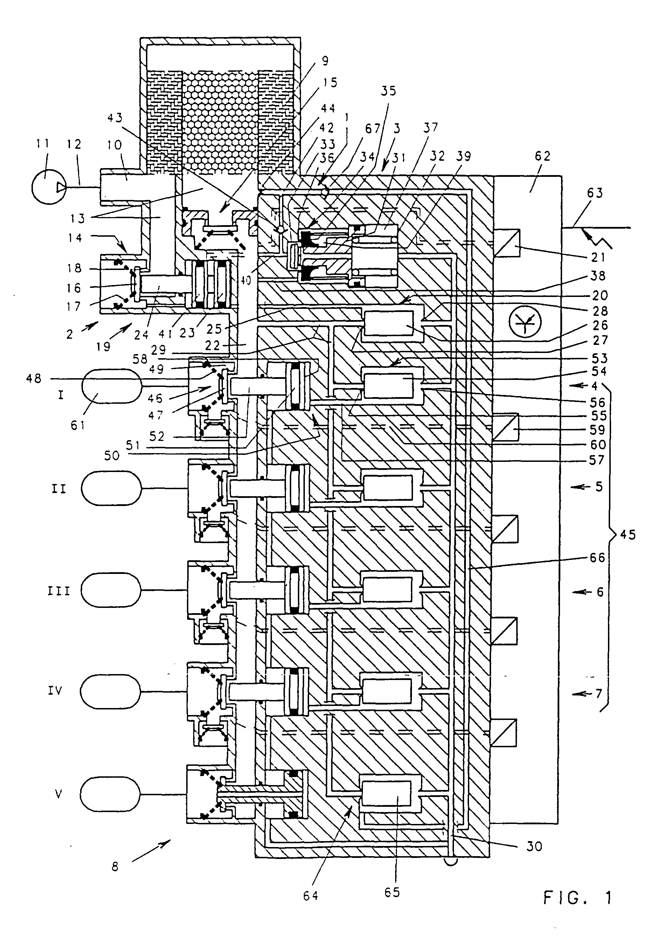

In Fig. 1 ist die Druckluftaufbereitungseinrichtung an einem ersten Ausführungsbeispiel erläutert. In einem gemeinsamen Gehäuse 1 ist ein elektropneumatischer Druckregler 2, ein rudimentärer mechanisch-pneumatischer Druckregler 3, Steuereinheiten 4, 5, 6, 7, 8 für einzelne Kreise sowie ein Lufttrockner 9 integriert vorgesehen. Am Gehäuse 1 ist ein Eingangsanschluß 10 vorgesehen, über den von einem Kompressor 11 über eine Leitung 12 gelieferte Druckluft der Druckluftaufbereitungseinrichtung zugeleitet wird. Mit dem Eingangsanschluß 10 steht ein Durchtrittsraum 13 in Verbindung, der einerseits zu einem gesteuerten Auslaßventil 14 und andererseits über den Lufttrockner 9 zu einem Rückschlagventil 15 führt. Das gesteuerte Auslaßventil 14 ist als Sicherheitsventil ausgebildet. Es besitzt ähnlich wie ein Rückschlagventil einen Ventilkörper 16, der auf einer einstellbaren Feder 17 abgestützt ist. Der Ventilkörper 16 arbeitet mit einem Gehäuserand 18 zusammen. Je nach der Einstellung der Feder 17 kann hier an dem Auslaßventil 14 ein Sicherheitsdruck eingestellt werden. Das Auslaßventil 14 führt in die Atmosphäre und verhindert, daß sich im Durchtrittsraum 13 ein höherer Druck als der eingestellte Sicherheitsdruck ausbilden kann. Funktionsmäßig gehört das Auslaßventil 14 sowohl zu dem elektropneumatischen Druckregler 2 wie auch zu dem mechanisch-pneumatischen Druckregler 3. Wenn man es baulich als Bestandteil des elektropneumatischen Druckreglers 2 ansieht, kann die funktionelle Integration des mechanisch-pneumatischen Druckreglers 3 als bauliche Integration des Schaltkolbens eines solchen mechanisch-pneumatischen Druckreglers 3 bezeichnet werden. Zu dem elektropneumatischen Druckregler 2 gehört ferner eine Einrichtung 19 zum abwechselnden Öffnen und Schließen des Auslaßventils 14. Weitere Bestandteile des elektropneumatischen Druckreglers 2 sind ein Magnetventil 20 und ein Drucksensor 21, der an einen Raum 22 nach dem Rückschlagventil 15 angeschlossen ist. Die Einrichtung 19 zum abwechselnden Öffnen und Schließen weist einen Kolben 23 und einen Stößel 24 auf, der zum Aufstoßen des Ventilkörpers 16 des Auslaßventiles 14 dient. Von dem Magnetventil 20 führt eine Leitung 25 zu der dem Kolben 23 zugeordneten Steuerkammer. Das Magnetventil 20 weist einen Ventilmagneten 26, einen Einlaßsitz 27 und einen Auslaßsitz 28 auf. Der Einlaßsitz 27 ist über eine Leitung 29 in dauernder Verbindung zu dem Raum 22. Der Auslaßsitz 28 hat Verbindung zu einer Entlüftungsleitung 30.

Der baulich rudimentäre mechanisch-pneumatische Druckregler 3 weist einen in einer Bohrung des Gehäuses mittels einer Dichtung geführten Kolben 31 auf, der auf einer Feder 32 abgestützt ist. Der Kolben 31 ist einstückig zu einer Schaltstange 33 verlängert, die ein Durchlaßventil 34 betätigt, welches von einem Doppelventilkörper 35 und einem gehäuseseitigen Rand 36 gebildet wird. Der Kolben 31 ist zu Zwecken der Entlüftung hohl ausgebildet. Der Federraum 37 ist ebenfalls an die Entlüftungsleitung 30 angeschlossen. Die Wirkfläche des Kolbens 31 steht über eine Leitung 38 in dauernder Verbindung zu dem Raum 22, so daß in der Kammer 39 der Druck des Raumes 22 herrscht. Jenseits des Durchlaßventiles 34 zweigt von dem mechanisch-pneumatischen Druckregler 3 eine Schaltleitung 40 ab, die zu der Wirkfläche eines weiteren Kolbens 41 führt, der gleichsam zu dem mechanisch-pneumatischen Druckregler 3 gehört. Die Kolben 23 und 41 liegen fliegend hintereinander und stützen sich aneinander ab. Der Kolben 41 trägt den Stößel 24. Die Kolben 23 und 41 könnten auch umgekehrt zugeordnet bzw. beaufschlagt sein.

Von der Schaltleitung 40 zweigt eine Rückströmleitung 42 ab, in der ein Rückschlagventil 43 und eine Drossel 44 angeordnet sind. Die Rückströmleitung 42 führt über den Trockner 9 zum Auslaßventil 14 und dient der Regeneration des Trockners 9.

Die Steuereinheiten 4, 5, 6, 7, 8 sind identisch oder ähnlich ausgebildet und bilden insgesamt das elektropneumatisch ausgebildete Mehrkreisschutzventil 45. Die Steuereinheiten 4, 5, 6 und 7 sind identisch ausgebildet und mögen den Kreisen I, II, III und IV zugeordnet sein. Der Einfachheit halber ist hier nur die Steuereinheit 4 mit ihren Einzelheiten beschrieben. Die Steuereinheit 4 weist ein Rückschlagventil 46 auf, welches einen Ventilkörper 47 besitzt, der auf einer einstellbaren Feder 48 abgestützt ist und mit einem Gehäuserand 49 zusammenarbeitet. Dem Rückschlagventil 46 ist eine Betätigungseinheit 50 zugeordnet, die einen Kolben 51 und einen Stößel 52 aufweist. Der Stößel 52 dient zur Betätigung des Rückschlagventils 46. Zu der Steuereinheit 4 gehört weiterhin noch ein Magnetventil 53 mit einem Ventilmagnet 54, einem Einlaßsitz 55 und einem Auslaßsitz 56, der ebenso wie der Auslaßsitz 28 des Magnetventils 20 an die Entlüftungsleitung 30 angeschlossen ist. Am Einlaßsitz 55 steht Druck über die Leitung 29 an. Vom Magnetventil 53 führt eine Leitung 57 zu der Wirkfläche 58 des Kolbens 51 der Betätigungseinheit 50. Zu der Steuereinheit 4 gehört schließlich noch ein Drucksensor 59, der über eine Leitung 60 den Druck nach dem Rückschlagventil 46 und damit in dem Behälter 61 des Kreises I mißt bzw. überwacht. Der Drucksensor 59 ist Bestandteil einer elektronischen Steuer- und Überwachungseinrichtung 62, die schematisch als integrierter Bestandteil der Druckluftaufbereitungseinrichtung angedeutet ist.

Die Steuereinheiten 5, 6, 7 des Mehrkreisschutzventils 45 sind identisch ausgebildet, angeordnet und angeschlossen, so daß hier auf die Beschreibung der Steuereinheit 4 verwiesen werden kann. Lediglich die Steuereinheit 8 ist nicht elektrisch vorgesteuert. Es ist hier ein Kreis V abgezweigt, dessen Aussteuerung rein mechanisch-pneumatisch verwirklicht ist.

Die Steuer- und Überwachungseinrichtung 62 wird mit elektrischer Spannung über die Leitung 63 versorgt.

Im Gehäuse 1 der Druckluftaufbereitungseinrichtung ist ein weiteres Magnetventil 64 mit Ventilmagnet 65 vorgesehen. Das Magnetventil 64 dient der Regeneration des Lufttrockners. Bei Erregung des Ventilmagneten 65 wird dessen Einlaßventil geöffnet und dessen Auslaßventil geschlossen, so daß Druckluft aus dem Raum 22 über die Leitung 29 und die Rückströmleitung 66, ein Rückschlagventil 67 und die Drossel 44 den Trockner 9 rückwärts in der Regenerationsphase durchströmen kann. Die Rückströmleitung 66 erfüllt ihre Funktion, wenn der elektropneumatische Druckregler 2 die Regenerationsphase aussteuert. Die Rückströmleitung 42 erfüllt ihre Funktion, wenn der mechanisch-pneumatische Druckregler 3 die Regenerationsphase aussteuert.

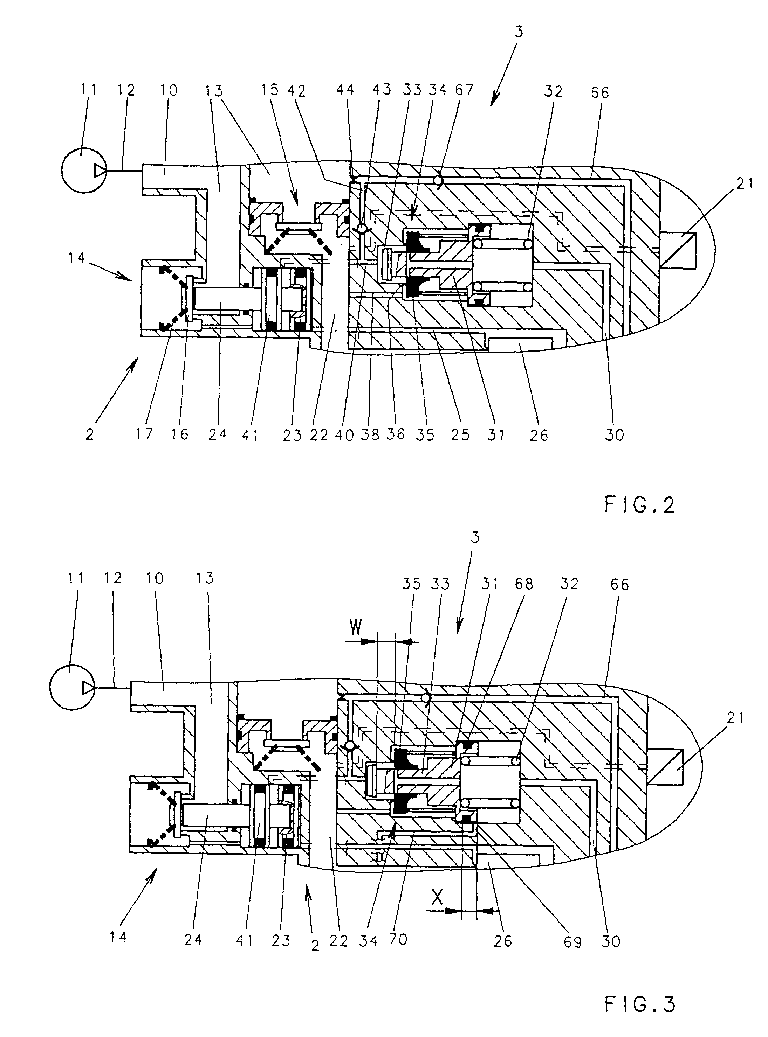

Fig. 2 zeigt noch einmal in vergrößerter Darstellung Elemente des elektropneumatischen Druckreglers 2, insbesondere das gesteuerte Auslaßventil 14 sowie Elemente des mechanisch-pneumatischen Druckreglers 3. Es ist erkennbar, daß der Doppelventilkörper 35 des Durchlaßventils 34 am Kolben 31 über eine Feder abgestützt ist. In der dargestellten drucklosen Ausgangsstellung ist das Durchlaßventil 34 geschlossen, während die Steuerkammer des Kolbens 41 über die Schaltleitung 40 und durch die hohle Schaltstange 33 sowie den Kolben 31 hindurch über die Entlüftungsleitung 30 an die Atmosphäre angeschlossen ist.

Die Druckluftaufbereitungseinrichtung gemäß den Fig. 1 und 2 arbeitet bei intakter Anlage wie folgt. Die Ventilkörper 47 der Rückschlagventile 46 der Steuereinheiten 4, 5, 6, 7 und 8 können mit Hilfe der einstellbaren Federn 48 gleich oder unterschiedlich eingestellt sein, je nach den gewünschten Vorratsdrücken in den Behältern 61 der Kreise I, II, III, IV und V. Der elektropneumatisch ausgebildete Druckregler 2 steuert über sein Auslaßventil 14, welches in der Lastlaufphase geschlossen ist, entsprechende Drücke in die Behälter 61 der Kreise ein, so daß diese aufgefüllt werden. Dabei werden auch die Magnetventile 53 der Steuereinheiten 4, 5, 6, 7 über die Steuer- und Überwachungseinrichtung 62 entsprechend betätigt und geschaltet. Über die Drucksensoren 59 der einzelnen Steuereinheiten kann das Erreichen der vorgesehenen Drücke in den Behältern 61 überwacht und das jeweilige Magnetventil 53 umgeschaltet werden. Der Abschaltdruck des elektropneumatischen Druckreglers 2 wird über den Drucksensor 21 gemessen, so daß dann durch Öffnen des Auslaßventils 14 die Leerlaufphase des Druckreglers eingeleitet wird. Während dieser Druckerhöhung im Raum 22 wird der Kolben 31 des mechanisch-pneumatischen Druckreglers 3 gegen die Kraft der Feder 32 entsprechend dem sich aufbauenden Druck bewegt, allerdings so, daß der Ventilkörper 35 des Durchlaßventils 34 in Ruhe bleibt und damit das Durchlaßventil 34 geschlossen bleibt. Das verdickte Ende der Schaltstange 33 kann dabei den Ventilkörper 34 noch nicht von seinem Sitz abheben. Dies bedeutet, daß der Abschaltdruck des mechanisch-pneumatischen Druckreglers 3 mit Hilfe der einstellbaren Feder 32 mit Abstand höher eingestellt ist als der Abschaltdruck des elektropneumatischen Druckreglers 2.

Tritt beispielsweise im Kreis I ein Leck auf, so daß hier eine Abströmung der Druckluft erfolgt, so wird dies der Drucksensor 59 der Steuereinheit 4 feststellen, so daß über die Steuer- und Überwachungseinrichtung 62 das Magnetventil 53 der Steuereinheit 4 nicht mehr geschaltet wird. Es verbleibt in der geschlossenen dargestellten Stellung gemäß Fig. 1. Je nach der Größe des Lecks wird das Rückschlagventil 46 der Steuereinheit 4 in eine entsprechende Stellung gehen. In diesem Defektfall können in den Behältern 61 der Kreise II, III, IV und V Vorratsdrücke realisiert werden, die dem eingestellten Öffnungsdruck des Rückschlagventils 46 des Kreises I entsprechen.

Fällt dagegen die elektrische Versorgung der Steuer- und Überwachungseinrichtung 62 aus oder tritt ein Defekt in der Elektrik ein, so wird die gesamte elektrische Steuerung funktionslos oder funktionslos gemacht, und es übernimmt der auf einen höheren Abschaltdruck eingestellte mechanisch-pneumatische Druckregler 3 bzw. dessen rudimentäre Teile zusammen mit dem Auslaßventil 14 des elektropneumatischen Druckreglers 2 die Umschaltung von der Lastlaufphase in die Leerlaufphase und umgekehrt. Es versteht sich, daß in diesem Defektfall des Spannungsausfalls kein Leck in einem der Kreise vorhanden ist, weil das gleichzeitige Auftreten zweier Fehler als unwahrscheinlich angesehen wird. Es wird sich bei Spannungsausfall im Raum 22 entsprechend dem Abschaltdruck des mechanisch-pneumatischen Druckreglers 3 ein höherer Druck aufbauen, der auch auf die Wirkfläche des Kolbens 31 einwirkt, so daß numehr der Kolben 31 einen vergleichsweise größeren Hub zurücklegt, wobei sich das verdickte Ende der Schaltstange 33 an den Ventilkörper 35 des Durchlaßventils 34 legt. Mit dem Erreichen des Abschaltdruckes wird der Ventilkörper 35 von dem Rand 36 abgehoben und so die Leerlaufphase eingeleitet. Über die Schaltleitung 40 wird einerseits das Auslaßventil 14 geöffnet und andererseits die Regenerationsphase des Druckreglers über die Rückströmleitung 42 eingeleitet. Man erkennt, daß selbst in diesem Defektfall eine Regeneration des Trockners 9 erreicht wird.

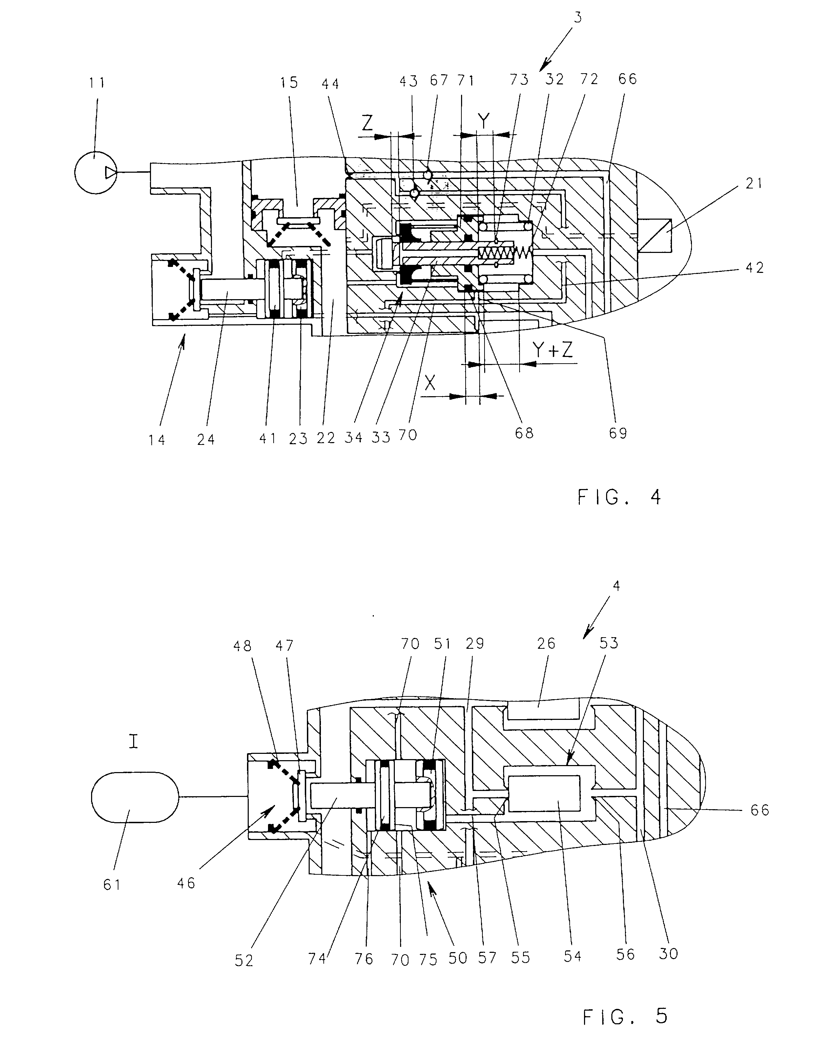

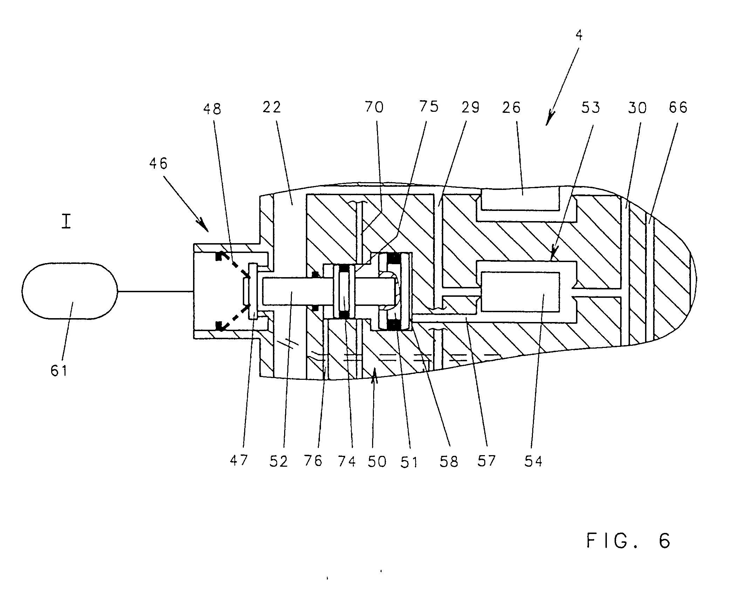

Fig. 3 zeigt eine Weiterbildung des Details des mechanisch-pneumatischen Druckreglers 3 gemäß Fig 2. Die Zeichnung stimmt in weiten Bereichen mit Fig. 2 überein, weshalb auf deren Beschreibung verwiesen werden kann. Zusätzlich besitzt der mechanisch-pneumatische Druckregler 3 in seiner Gehäusewandung in relativer Zuordnung zu der Dichtung 68 des Kolbens 31 eine überfahrbare Bohrung 69, von der eine Steuerleitung 70 ausgeht, die zu den Steuereinheiten 4, 5, 6 und 7 führt. Der Hub x der Dichtung 68 des Kolbens 31 des mechanisch-pneumatischen Druckreglers 3 relativ zu der überfahrbaren Bohrung 69 ist kleiner als der Schalthub w, den der Kolben 31 und mit ihm die Schaltstange 33 zurücklegen muß, um das Durchlaßventil 34 zu öffnen. Diese Abstimmung zielt darauf ab, in der Steuerleitung 70 vor Erreichen des Abschaltdruckes des mechanisch-pneumatischen Druckreglers 3 einen Steuerimpuls zu erhalten, also Druckluft aus dem Raum 22 in die Steuerleitung 70 zu schicken. Die Bedeutung dieses Steuerimpulses wird später anhand der Fig. 5 und 6 erläutert werden.

Fig. 4 zeigt eine weitere Ausführungsmöglichkeit für wesentliche Elemente des mechanisch-pneumatischen Druckreglers 3. Der Kolben 31 ist hier als Ringkolben ausgebildet, der von der hier separat ausgebildeten Schaltstange 33 abgedichtet durchdrungen wird. Die Schaltstange 33 ist hier auf einer weiteren Feder 72 abgestützt und besitzt einen Anschlag 73 für die Mitnahme der Schaltstange 33 bei entsprechender Betätigung des Ringkolbens 71. Diese Ausbildung hat den Vorteil, daß die beiden Federn 32 und 72 unterschiedlich und unabhängig voneinander gewählt bzw. dimensioniert und eingestellt werden können. Auch hier ist der Hub x zwischen der Dichtung 68 und der überfahrbaren Bohrung 69 vorgesehen. Der Kolben 71 kann einen Hub y + z zurücklegen, der geringfügig größer als die Summe der Hübe z und y ausgebildet ist, um das Durchlaßventil 34 öffnen zu können. Von der überfahrbaren Bohrung 69 zweigt nicht nur die Steuerleitung 70, sondern auch die Rückströmleitung 42 ab, die in der Regenerationsphase benötigt wird, wenn diese durch den mechanisch-pneumatischen Druckregler 3 geschaltet wird. Es versteht sich, daß die Regeneration des Druckreglers 3 jedoch erst dann erfolgen kann, wenn der Abschaltdruck des Druckreglers 3 erreicht ist. Die Ausführungsform gemäß Fig. 4 hat den Vorteil, daß die Federn 32 und 72 separat voneinander dimensioniert werden können, so daß auf das zeitliche Auftreten des Signals in der Steuerleitung 70 Einfluß genommen werden kann.

Fig. 5 zeigt die Weiterbildung einer Steuereinheit am Beispiel der Steuereinheit 4. Es kann zunächst auf die Beschreibung der Fig. 1 verwiesen werden. Die Betätigungseinheit 50 weist hier neben dem Kolben 51 noch einen zweiten Kolben 74 auf, der ähnlich wie die Kolben 23 und 41 hintereinander angeordnet sind und sich aneinander abstützen. Während der Kolben 51 über die Leitung 57 von dem Magnetventil 53 belüftbar ist, führt die Leitung 70 zu der Wirkfläche 75 des Kolbens 74. Dies erbringt die Möglichkeit, das Rückschlagventil 46 durch Belüftung der Wirkfläche 75 des Kolbens 74 über die Leitung 70 zu erreichen, wenn bei Spannungsausfall der Abschaltdruck des mechanisch-pneumatischen Druckreglers 3 noch nicht erreicht ist. Damit wird es möglich, im Behälter 61 des Kreises I einen vergleichsweise erhöhten Vorratsdruck in diesem Defektfall aufrechtzuerhalten. Die Leitung 70 führt weiter auch zu den Betätigungseinheiten 50 der übrigen Kreise II, III und IV. Eine Leitung 76 ist zu Entlüftungszwecken vorgesehen.

Fig. 6 zeigt eine Weiterbildung gegenüber Fig. 5, mit der sie weitgehend übereinstimmt, so daß auf die diesbezügliche Beschreibung verwiesen werden kann. Die Betätigungseinheit 50 weist auch hier die beiden Kolben 51 und 74 auf. Der Kolben 74 ist jedoch kleiner gestaltet, so daß seine Wirkfläche 75 kleiner als die Wirkfläche 58 des Kolbens 51 ist. Dies bedeutet, daß der in der Steuerleitung 70 zu gegebener Zeit wirksame Impuls nur in der Lage ist, eine vergleichsweise verminderte Kraft auf den Ventilkörper 47 des Rückschlagventils 46 zu übertragen. Diese verminderte Kraft ist kleiner als die an der Feder 48 eingestellte Öffnungskraft, so daß das Rückschlagventil 46 bei einer solchen kraftmäßigen Beaufschlagung nicht geöffnet, jedoch vorteilhaft kraftentlastet werden kann. Das Ventilglied 47 befindet sich damit weiterhin in der Schließstellung, kann jedoch infolge eines vergleichsweise niedrigeren Druckes im Raum 22 geöffnet werden. Das Rückschlagventil 46 öffnet also vergleichsweise früher.

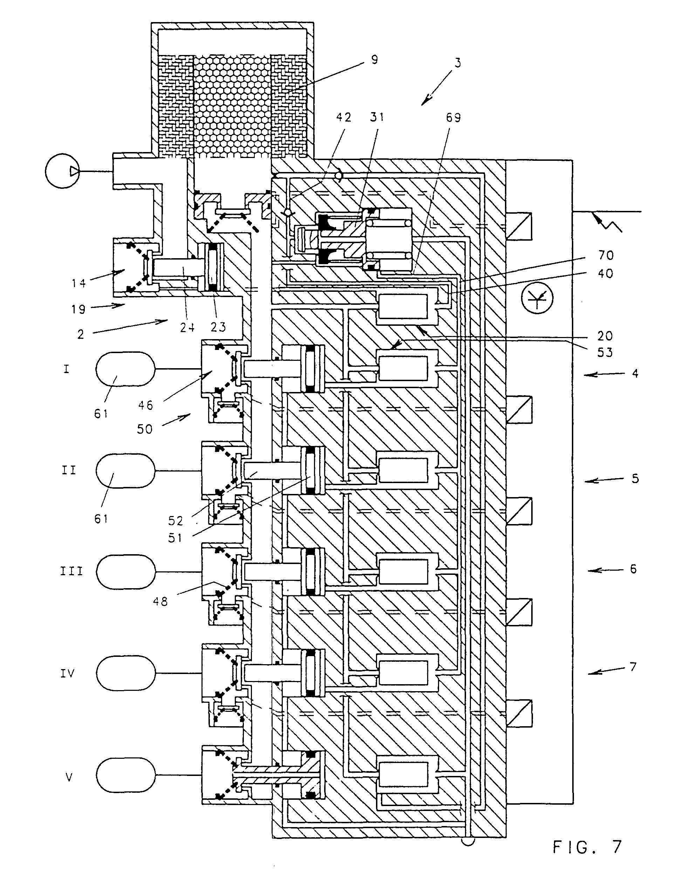

Die in Fig. 7 dargestellte Ausführungsform der Druckluftaufbereitungseinrichtung ist insofern einfach aufgebaut, als für die Einrichtung 19 zum abwechselnden Öffnen und Schließen des Auslaßventils 14 und für die Betätigungseinheit 50 jeder Steuereinheit 4, 5, 6 und 7 identische Teile eingesetzt werden können, bestehend aus einem als Rückschlagventil ausgebildeten Auslaßventil 14 bzw. einem Rückschlagventil 46 sowie einer Einheit aus einem Kolben 23 mit Stößel 24 bzw. Kolben 51 mit Stößel 52. Die von der überfahrbaren Bohrung 69 ausgehende Steuerleitung 70 ist hier durch die Magnetventile 53 der Steuereinheiten 4, 5, 6 und 7 geführt, so daß die Betätigungseinheiten 50 nur einen Kolben 51 aufweisen müssen. Auch die Schaltleitung des mechanisch-pneumatischen Druckreglers 3 ist über das Magnetventil 20 des elektropneumatischen Druckreglers 2 geführt, so daß auch die Einheit 19 mit einem Kolben 23 auskommt. Die Rückströmleitung 42 ist gegenüber der Ausführungsform gemäß Fig. 1 unverändert. Bei Verwendung identischer Bauteile ist es zur Erreichung unterschiedlicher Vorratsdrücke in den Kreisen I, II, III und IV erforderlich, die Federn 48 der betreffenden Rückschlagventile 46 entsprechend unterschiedlich einzustellen.

### BEZUGSZEICHENLISTE

- 1 -: Gehäuse
- 2 -: elektropn. Druckregler
- 3 -: mech.-pneum. Druckregler
- 4 -: Steuereinheit
- 5 -: Steuereinheit
- 6 -: Steuereinheit
- 7 -: Steuereinheit
- 8 -: Steuereinheit
- 9 -: Lufttrockner
- 10 -: Eingangsanschluß
- 11 -: Kompressor
- 12 -: Leitung
- 13 -: Durchtrittsraum
- 14 -: Auslaßventil
- 15 -: Rückschlagventil
- 16 -: Ventilkörper
- 17 -: Feder
- 18 -: Gehäuserand
- 19 -: Einrichtung
- 20 -: Magnetventil

- 21 -: Drucksensor
- 22 -: Raum
- 23 -: Kolben
- 24 -: Stößel
- 25 -: Leitung
- 26 -: Ventilmagnet
- 27 -: Einlaßsitz
- 28 -: Auslaßsitz
- 29 -: Leitung
- 30 -: Entlüftungsleitung
- 31 -: Kolben
- 32 -: Feder
- 33 -: Schaltstange
- 34 -: Durchlaßventil
- 35 -: Doppelventilkörper
- 36 -: Rand
- 37 -: Federraum
- 38 -: Leitung
- 39 -: Kammer
- 40 -: Schaltleitung

- 41 -: Kolben
- 42 -: Rückströmleitung
- 43 -: Rückschlagventil
- 44 -: Drossel
- 45 -: Mehrkreisschutzventil
- 46 -: Rückschlagventil
- 47 -: Ventilkörper
- 48 -: Feder
- 49 -: Gehäuserand
- 50 -: Betätigungseinheit
- 51 -: Kolben
- 52 -: Stößel
- 53 -: Magnetventil
- 54 -: Ventilmagnet
- 55 -: Einlaßsitz
- 56 -: Auslaßsitz
- 57 -: Leitung
- 58 -: Wirkfläche
- 59 -: Drucksensor
- 60 -: Leitung

- 61 -: Behälter
- 62 -: Steuer- und Überwachungseinr.
- 63 -: elektrische Leitung
- 64 -: Magnetventil
- 65 -: Ventilmagnet
- 66 -: Rückströmleitung
- 67 -: Rückschlagventil
- 68 -: Dichtung
- 69 -: überfahrbare Bohrung
- 70 -: Steuerleitung
- 71 -: Ringkolben
- 72 -: Feder
- 73 -: Anschlag
- 74 -: Kolben
- 75 -: Wirkfläche
- 76 -: Leitung

## Patentansprüche

1. Druckluftaufbereitungseinrichtung für Druckluftbeschaffungsanlagen von Kraftfahrzeugen, die eine Baueinheit aus einem elektropneumatischen Druckregler (2), einem integrierten elektropneumatisch ausgebildeten Mehrkreisschutzventil (45) und einem Lufttrockner (9) bildet, mit einem einen Eingangsanschluß (10) und einen Auslaß aufweisenden gemeinsamen Gehäuse (1), in dem ein Durchtrittsraum (13) für die herangeführte Druckluft vorgesehen ist, der über ein gesteuertes, als Sicherheitsventil ausgebildetes Auslaßventil (14) in dessen Offenstellung mit der Atmosphäre verbunden ist, mit einem dem Durchtrittsraum (13) nachgeschalteten Rückschlagventil (15), mit einer Einrichtung (19) zum abwechselnden Öffnen und Schließen des Auslaßventils (14), mit mehreren gleichartigen den einzelnen Kreisen (I, II, III, etc.) zugeordneten Steuereinheiten (4, 5, 6, etc.), die je ein entgegen der Strömungsrichtung schließendes Rückschlagventil (46) und eine Betätigungseinheit (50) zum gesteuerten Öffnen des Rückschlagventils (46) aufweisen, **dadurch gekennzeichnet**, daß zusätzlich zu dem elektropneumatischen Druckregler (2) ein mechanisch-pneumatischer Druckregler (3) integriert ist, dessen Abschaltdruck deutlich höher als der Abschaltdruck des elektropneumatischen Druckreglers (2) eingestellt ist, daß der mechanisch-pneumatische Druckregler (3) zugleich als Schaltventil für die Einschaltung einer Regenerationsphase für den Lufttrockner (9) nach Erreichen seines Abschaltdruckes ausgebildet ist, und daß das als Sicherheitsventil ausgebildete Auslaßventil (14) auf einen höheren Öffnungsdruck als der Abschaltdruck des mechanisch-pneumatischen Druckreglers (3) eingestellt ist.

2. Druckluftaufbereitungseinrichtung nach Anspruch 1, **dadurch gekennzeichnet**, daß der mechanisch-pneumatische Druckregler (3) einen auf einer Feder (32) abgestützten Kolben (31) aufweist, der nach Überbrückung eines Freigangs ein geschlossenes Durchlaßventil (34) zum Schalten des gesteuerten Auslaßventils (14) des elektropneumatischen Druckreglers (2) in die Leerlaufphase öffnet.

3. Druckluftaufbereitungseinrichtung nach Anspruch 1 und 2, **dadurch gekennzeichnet**, daß von der von dem mechanisch-pneumatischen Druckregler (3) zum gesteuerten Auslaßventil (14) führenden Schaltleitung (40) eine Rückströmleitung (42) für die Regeneration des Lufttrockners (9) ausgeht, in der ein Rückschlagventil (43) vorgesehen ist.

4. Druckluftaufbereitungseinrichtung nach Anspruch 1 und 2, **dadurch gekennzeichnet**, daß der Kolben (31) des mechanisch-pneumatischen Druckreglers (3) eine Dichtung (68) aufweist, der eine überfahrbare Bohrung (69) zugeordnet ist, von der eine Rückströmleitung (42) für die Regeneration des Lufttrockners (9) ausgeht, in der ein Rückschlagventil (43) vorgesehen ist.

5. Druckluftaufbereitungseinrichtung nach Anspruch 3 oder 4, **dadurch gekennzeichnet**, daß die elektrisch vorgesteuerte Betätigungseinheit (50) zumindest einer der gleichartigen, den einzelnen Kreisen (I, II, III, etc.) zugeordneten Steuereinheiten (4, 5, 6, etc.) zwei hintereinander angeordnete Kolben (51, 74) mit Stößel (52) zum gesteuerten Öffnen des Rückschlagventils (46) aufweist, wobei die Wirkfläche (58) des einen Kolbens (51) an die elektrische Vorsteuerung des elektropneumatischen Druckreglers (2) und die Wirkfläche (75) des anderen Kolbens (74) an eine von der überfahrbaren Bohrung (69) herangeführte Steuerleitung (70) angeschlossen ist.

6. Druckluftaufbereitungseinrichtung nach Anspruch 5, **dadurch gekennzeichnet**, daß die Wirkfläche (75) des Kolbens (74), der über die von der überfahrbaren Bohrung (69) herangeführte Steuerleitung (70) des mechanisch-pneumatischen Druckreglers (3) beaufschlagbar ist, kleiner als die von der Vorsteuerung der betreffenden Steuereinheit (4, 5, etc.) beaufschlagte Wirkfläche (58) des anderen Kolbens (51) ausgebildet ist.

7. Druckluftaufbereitungseinrichtung nach Anspruch 5 oder 6, **dadurch gekennzeichnet**, daß der Hub (x) der Dichtung (68) des Kolbens (31) des mechanisch-pneumatischen Druckreglers (3) relativ zu der überfahrbaren Bohrung (69) kleiner als der Schalthub (w) des Kolbens (31) des mechanisch-pneumatischen Druckreglers (3) von der Lastlaufphase in die Leerlaufphase ausgebildet ist.

8. Druckluftaufbereitungseinrichtung nach Anspruch 7, **dadurch gekennzeichnet**, daß der Kolben des mechanisch-pneumatischen Druckreglers (3) als Ringkolben (71) ausgebildet und von einer Schaltstange (33) durchsetzt ist, die zusätzlich auf einer weiteren Feder (72) abgestützt ist.

9. Druckluftaufbereitungseinrichtung nach Anspruch 8, **dadurch gekennzeichnet**, daß die den Ringkolben belastende Feder (32) in Abhängigkeit zu dem Auftreten eines festgelegten Steuerdruckes in der zu dem gesteuerten Rückschlagventil (46) des betreffenden Kreises (I, II, III, etc.) führenden Steuerleitung (70) ausgelegt ist.

10. Druckluftaufbereitungseinrichtung nach einem der Ansprüche 1 bis 4, **dadurch gekennzeichnet**, daß der elektropneumatische Druckregler (2) und die Steuereinheiten (4, 5, 6, etc.) der Kreise (I, II, III, etc.) je ein in Strömungsrichtung öffnendes Rückschlagventil (14, 46) und eine elektrisch vorgesteuerte Betätigungseinheit (19, 50) aus einem Kolben (23, 51) mit Stößel (24, 52) zum Öffnen des Rückschlagventils (14, 46) aufweisen, daß die von dem mechanisch-pneumatischen Druckregler (3) zur Betätigungseinheit des elektropneumatischen Druckreglers (2) führende Schaltleitung (40) über die elektrische Vorsteuerung (20) des elektropneumatischen Druckreglers (2) geführt ist, und daß die von dem mechanisch-pneumatischen Druckregler (3) zu den Betätigungseinheiten der Kreise (I, II, III, etc.) führende Steuerleitung (70) über die elektrischen Vorsteuerungen (53) der Kreise geführt ist.

## Claims

1. An apparatus for processing compressed air for compressed air systems in motor vehicles, the apparatus forming a common unit including an electro-pneumatic pressure control unit (2), an integrated electro-pneumatic multi-circuit protection valve (45) and an air dryer (9), comprising a common housing (1) including an inlet connection (10) and an outlet, a passage chamber (13) for the delivered compressed air being provided in the common housing (1), the passage chamber (13) being connected to the atmosphere via a controlled outlet valve (14) in its opened position, the outlet valve (14) being designed as a safety valve, a check valve (15) being arranged downstream of the passage chamber (13), a unit (19) for alternately opening and closing the outlet valve (14), a plurality of control units (4, 5, 6 and so forth) of the same kind being associated with the respective circuits (I, II, III and so forth), each of the control units (4, 5, 6 and so forth) including a check valve (46) closing against the direction of flow and an actuation unit (50) for opening the check valve (46) in a controlled way, **characterized in** that a mechanical-pneumatic pressure control unit (3) is integrated in addition to the electro-pneumatic pressure control unit (2), the switching off pressure of the mechanical-pneumatic pressure control unit (3) being adjusted to be substantially greater than the switching off pressure of the electro-pneumatic pressure control unit (2), that the mechanical-pneumatic pressure control unit (3) is also designed as a switching valve for switching on a regeneration phase for the air dryer (9) after having reached its switching off pressure, and that the outlet valve (14) being designed as a safety valve is adjusted to have an opening pressure being greater than the switching off pressure of the mechanical-pneumatic pressure control unit (3).

2. The apparatus for processing compressed air of claim 1, **characterized in** that the mechanical-pneumatic pressure control unit (3) includes a piston (31) being supported on a spring (32), the piston (31) after having passed a release travel opening a closed overflow valve (34) to switch off the controlled outlet valve (14) of the electro-pneumatic pressure control unit (2) to reach the idle phase.

3. The apparatus for processing compressed air of claim 1 and 2, **characterized** **in** that a backflow conduit (42) for the regeneration of the air dryer (9) starts at the switching conduit (40) leading from the mechanical-pneumatic pressure control unit (3) to the controlled outlet valve (14), a check valve (43) being provided in the backflow conduit (42).

4. The apparatus for processing compressed air of claim 1 and 2, **characterized in** that the piston (31) of the mechanical-pneumatic pressure control unit (3) includes a seal (68), an overrunable bore (69) being associated with the seal (68), a backflow conduit (42) for the regeneration of the air dryer (9) starting at the bore (69), a check valve (43) being provided in the backflow conduit (42).

5. The apparatus for processing compressed air of claim 3 or 4, **characterized in** that the electrically pre-controlled actuation unit (50) of at least one the control units (4, 5, 6 and so forth) of the same kind being associated with the respective circuits (I, II, III and so forth) includes two pistons (51, 74) being arranged one after the other and including a rod (52) for opening the check valve (46) in a controlled way, the effective surface (58) of one of the pistons (51) being connected to the electrical pre-control unit of the electro-pneumatic pressure control unit (2) and the effective surface (75) of the other piston (74) being connected to a control conduit (70) coming from the overrunable bore (69).

6. The apparatus for processing compressed air of claim 5, **characterized in** that the effective surface (75) of the piston (74) is designed to be less than the effective surface (58) of the other piston (51) being subjected by the pre-control of the respective control unit (4, 5 and so forth), the piston (74) being subjectable via the control conduit (70) of the mechanical-pneumatic pressure control unit (3) coming from the overrunable bore (69).

7. The apparatus for processing compressed air of claim 5 or 6, **characterized in** that the stroke (x) of the seal (68) of the piston (31) of the mechanical-pneumatic pressure control unit (3) with respect to the overrunable bore (69) is designed to be less than the switching stroke (w) of the piston (31) of the mechanical- pneumatic pressure control unit (3) from the load phase into the idle phase.

8. The apparatus for processing compressed air of claim 7, **characterized in** that the piston of the mechanical-pneumatic pressure control unit (3) is designed as an annular piston (71) and it is interspersed by a switching bar (33) being additionally supported on another spring (72).

9. The apparatus for processing compressed air of claim 8, **characterized in** that the spring (32) subjecting the annular piston to a force is designed depending on the occurrence of a predetermined control pressure in the control conduit (70) leading to the controlled check valve (46) of the respective circuit (I, II, III and so forth).

10. The apparatus for processing compressed air of one of claims 1 to 4, **characterized in** that the electro-pneumatic pressure control unit (2) and the control units (4, 5, 6 and so forth) of the circuits (I, II, III and so forth) each include a check valve (14, 46) opening in the direction of flow and an electrically pre-controlled actuation unit (19, 50) including a piston (23, 51) with a rod (24, 52) for opening the check valve (14, 46), that the switching conduit (40) leading from the mechanical-pneumatic pressure control unit (3) to the actuation unit of the electro-pneumatic pressure control unit (2) is guided via the electrical pre-control unit (20) of the electro-pneumatic pressure control unit (2), and that the control unit (70) leading from the mechanical-pneumatic pressure control unit (3) to the actuation units of the circuits (I, II, III and so forth) is guided via the electrical pre-control unit (53) of the circuits.

## Revendications

1. Dispositif de traitement d'air comprimé pour installations de production d'air comprimé de véhicules automobiles, qui forme un ensemble constitué d'un régulateur de pression électropneumatique (2), d'une soupape de protection multi-circuits (45) électropneumatique et d'un séchoir à air (9), comportant un boîtier (1) commun avec un raccord d'entrée (10) et une sortie, dans lequel est prévue une chambre de passage (13) pour l'air comprimé amené, laquelle est reliée à l'atmosphère dans sa position ouverte, par l'intermédiaire d'une soupape d'échappement (14) commandée, conformée en soupape de sûreté, comportant un clapet de non-retour (15) monté en aval de la chambre de passage (13), comportant un dispositif (19) pour l'ouverture et la fermeture alternative de la soupape d'échappement (14), comportant plusieurs unités de commande (4, 5, 6, etc.) de même type, affectées aux différents circuits (I, II, III, etc.), qui comportent chacune un clapet de non-retour (46) se fermant dans le sens inverse au sens d'écoulement ainsi qu'une unité d'actionnement (50) pour l'ouverture commandée du clapet de non-retour (46), caractérisé en ce qu'en supplément au régulateur de pression électropneumatique (2), est intégré un régulateur de pression mécanique et pneumatique (3), dont la pression de coupure est réglée nettement plus haut que la pression de coupure du régulateur de pression électropneumatique (2), en ce que le régulateur de pression mécanique et pneumatique (3) est conformé en même temps en soupape de commande pour l'enclenchement d'une phase de régénération du séchoir à air (9), après que sa pression de coupure a été atteinte, et en ce que la soupape d'échappement (14), conformée en soupape de sûreté, est réglée sur une pression d'ouverture supérieure à la pression de coupure du régulateur de pression mécanique et pneumatique (3).

2. Dispositif de traitement d'air comprimé selon la revendication 1, caractérisé en ce que le régulateur de pression mécanique et pneumatique (3) comporte un piston (31) qui s'appuie sur un ressort (32) et qui, après avoir franchi une course à vide, ouvre une soupape de passage (34) fermée pour commander la soupape d'échappement (14) commandée du régulateur de pression électropneumatique (2) dans la phase de ralenti.

3. Dispositif de traitement d'air comprimé selon les revendications 1 et 2, caractérisé en ce que de la conduite de commutation (14), qui mène du régulateur de pression mécanique et pneumatique (3) à la soupape d'échappement (14) commandée, part un conduit de retour (42) pour la régénération du séchoir à air (9), dans lequel est prévu un clapet de non-retour (43).

4. Dispositif de traitement d'air comprimé selon la revendication 1 et 2, caractérisé en ce que le piston (31) du régulateur de pression mécanique et pneumatique (3) comporte une garniture d'étanchéité (68) qui est affectée à un trou (69) qui peut être dépassé et duquel part un conduit de retour (42) pour la régénération du séchoir à air (9), dans lequel est prévu un clapet de non-retour (43).

5. Dispositif de traitement d'air comprimé selon la revendication 3 ou 4, caractérisé en ce que l'unité d'actionnement (50) à commande pilote électrique d'au moins l'une des unités de commande (4, 5, 6, etc.) comporte deux pistons (51, 74) disposés l'un derrière l'autre avec poussoir pour l'ouverture commandée du clapet de non-retour (46), la surface active (58) d'un piston (51) étant raccordée à la commande pilote électrique du régulateur de pression électropneumatique (2), et la surface active (75) de l'autre piston (74) étant raccordée à une conduite de commande (70) provenant du trou (69) pouvant être dépassé.

6. Dispositif de traitement d'air comprimé selon la revendication 5, caractérisé en ce que la surface active (75) du piston (74), qui peut être sollicitée par la conduite de commande (70) du régulateur de pression mécanique et pneumatique (3), provenant du trou (69) pouvant être dépassé, est plus petite que la surface active (58) de l'autre piston (51), sollicitée par la commande pilote de l'unité de commande (4, 5, etc.).

7. Dispositif de traitement d'air comprimé selon la revendication 5 ou 6, caractérisé en ce que la course (x) de la garniture d'étanchéité (68) du piston (31) du régulateur de pression mécanique et pneumatique (3) est plus petite, par rapport au trou (69) qui peut être dépassé, que la course de commande (w) du piston (31) du régulateur de pression mécanique et pneumatique (3), de la phase sous charge à la phase de ralenti.

8. Dispositif de traitement d'air comprimé selon la revendication 7, caractérisé en ce que le piston du régulateur de pression mécanique et pneumatique (3) est conformé en piston annulaire (71) et est traversé par une tige de commande (33) qui s'appuie en supplément sur un autre ressort (72).

9. Dispositif de traitement d'air comprimé selon la revendication 8, caractérisé en ce que le ressort (32), qui agit sur le piston annulaire, est dimensionné en fonction de l'apparition d'une pression de commande définie dans la conduite de commande (70) qui mène au clapet de non-retour (46) commandé du circuit (I, II, III, etc.) concerné.

10. Dispositif de traitement d'air comprimé selon l'une des revendications 1 à 4, caractérisé en ce que le régulateur de pression électropneumatique (2) et les unités de commande (4, 5, 6, etc.) des circuits (I, II, III, etc.) comportent chacun un clapet de non-retour (14, 46) qui s'ouvre dans le sens d'écoulement ainsi qu'une unité d'actionnement (19, 50) à commande pilote électrique, constituée d'un piston (23, 51) avec poussoir (24, 52), pour l'ouverture du clapet de non-retour (14, 46), en ce que la conduite de commutation (40) qui mène du régulateur de pression mécanique et pneumatique (3) à l'unité d'actionnement du régulateur de pression électropneumatique (2), passe par la commande pilote électrique (20) du régulateur de pression électropneumatique (2), et en ce que la conduite de commande (70) qui mène du régulateur de pression mécanique et pneumatique (3) aux unités d'actionnement des circuits (I, II, III, etc.), passe par les commandes pilotes électriques (53) des circuits.
